# EUROPEAN PATENT APPLICATION

(11) **EP 3 139 295 A1**
(43) Date of publication of application: **08.03.2017**
(21) Application number: 14890094.7
(22) Date of filing: 04.07.2014
(51) Int. Cl.: G06F 21/46

(54) **PASSWORD VERIFICATION DEVICE AND PASSWORD VERIFICATION METHOD**

(30) Priority: 24.04.2014 CN 201410169452
(71) Applicant: Smart Electronic Industrial (Dong Guan) Co. Ltd., Dongguan, Guangdong 523750 (CN)
(72) Inventor: ZHENG, Li, Dongguan Guangdong 523750 (CN)
(74) Representative: Rüger, Barthelt & Abel
(86) International application number: PCT/CN2014/081681
(87) International publication number: WO 2015/161565

(57) **Abstract**

A password verifying device employing a password verifying method is disclosed. The method includes comprising the following steps: providing a plurality of interactive regions on each of which several known characters are arranged and shown randomly, at least one interactive region containing at least two characters; accepting selection of said plurality of interactive regions made by the user, and after selection of present interactive regions by the user, randomly re-distributing said several known characters into said respective interactive regions to be shown and selected for next time; and comparing one by one characters contained in a predefined password sequence with characters contained in the interactive regions selected each time, and outputting signal representing successful password verification when each character contained in the password sequence is identical to a corresponding character shown in a corresponding interactive region selected each time. By causing fuzziness to the contents input by the user, the input contents become multi-vocal, thus ensuring the password will not be given away during input process. In addition, by randomly generating dynamical effect of the contents input by the user, password operation complexity is increased. This comprehensively and entirely improves safety and convenience of the password verification process.

## Description

### FIELD OF THE INVENTION

The present invention relates to an electronic safety protection technology and more particularly, relates to a password verifying device and method.

### BACKGROUD OF THE INVENTION

With continuous improvement of people life quality and deep understanding of safety, password verifying device and corresponding verifying method have been widely used in various areas of people life. In a typical situation, presently almost every person owns at least one mobile phone or tablet computer and in these devices, employment of verification method may be often found. In fact this is specific utilization of verification devices. For a mobile terminal, a display screen based on touch-feedback principle is generally provided. The most convenient manners may include slide-unlock, face-unlock, unlock by drawing a particular pattern in a nine-grid screen and the like all of which are well known publicly. All these manners suffer from some drawbacks. For example, slide-unlock may be seen by others completely; face-unlock may be cracked by static image; and unlock by drawing a particular pattern in a nine-grid screen is indeed a variation of nine-grid numerical keyboard and, it may also be easily seen by others and thus be cracked. Apparently, these prior art password verification manners used in mobile terminals all lack of sufficient safety and reliability and therefore are susceptible to being cracked by intentional peeping.

Earlier verification technology was mostly performed mechanically. For instance, combination lock extensively shown in kinds of bags and suitcases is also one of password verification device. This kind of verification device running mechanically similarly suffers from well-known disadvantages and as a result, electronic verification devices will gradually replace the mechanical verification device. As such, password verification device may be applied not only in various electronic mobile terminals, but also in other situations where password verification is necessary. For example kinds of travel bags, suitcases may use verification device in their electronic lock verification mechanism. Take another example, domestic electronics such as smart TV, router capable of human-machine interaction or central control device may use above device in their verification procedure. Take a further example, the above verification device may also find its application in access control system, electronic locks of a vending machine, strongbox and automobile gate. It may even be used in any new products that may immerge in future and that may require verification of password. Understandingly, password verification device is so important that it have great influence on various aspects of human life. Accordingly, it is desired to provide a good password verifying device and corresponding method in pursuit of higher and higher safety.

As described above however, though the password verification device is much important, currently available verification methods are not so satisfactory. During industry design process, designers should consider not only performance and safety of the product as discussed above, but also production cost and convenience of the product. Therefore, driven by balance among these industrial factors, verification techniques have been advanced gradually.

### SUMMARY OF THE INVENTION

The object of the invention is to overcome drawbacks of prior art technology and provide a password verifying method and corresponding device which have high safety and are easy to use.

To above ends, the following technical solution is proposed.

A password verifying method of the invention for verifying whether the password input by a user is correct includes the following steps:
(1) Providing a plurality of interactive regions on each of which several known characters are arranged and shown randomly, at least one interactive region containing at least two characters;
(2) Accepting selection of said plurality of interactive regions made by the user, and after selection of present interactive regions by the user, randomly re-distributing said several known characters into said respective interactive regions to be shown and selected for next time; and
(3) Comparing one by one characters contained in a predefined password sequence with characters contained in the interactive regions selected each time, and outputting signal representing successful password verification when each character contained in the password sequence is identical to a corresponding character shown in a corresponding interactive region selected each time.

To realize both fuzziness and convenience, the number of characters displayed each time in respective interactive region is identical, and the number is two or more. In addition, at least one character is commonly displayed in two or more interactive regions. Furthermore, it is required that not all interactive regions display the same character, thus making location of the character to be uncertain.

According to one embodiment of the invention, each time the user selection is accepted in step (2), one by one comparison is conducted in a manner as depicted in step (3) . When it is confirmed that a current character contained in said password sequence is identical to that displayed in the interactive region currently selected, the manner presented in step (2) is implemented to update characters of respective interactive regions. After that, wait for next selection of the user, and this process repeats until all the characters contained in the password sequence are successfully confirmed. Then, the signals are output in the manner of step (3).

According to another embodiment of the invention, in step (2) updated display content of the interactive regions is presented based on the number of the characters included in the password sequence. The character displayed in the interactive region selected by the user is recorded each time the user input is accepted. Step (3) is performed only after all the interactive regions are selected by the user. In this case, comparison is made between each character of the password sequence and character contained in a respective interactive region selected by the user each time. When the comparison is successful, the signals are output in step (3).

For safety reason, when the interactive regions are displayed each time, at least two of them show different characters.

For reason of high efficiency of the program, in process of comparison one by one, when it is determined that a specific character of the password sequence is not identical to that displayed in a corresponding interactive region selected by the user, the present method ends directly so as not to perform subsequent steps.

For safety reason, the predefined password sequence includes at least four characters.

To enhance complexity of decryption and safety, several interactive regions shown at a time are in different color.

As an embodiment of the invention, all the interactive regions are used for receiving user touch operations serving as selection instructions of respective interactive regions.

As another embodiment of the invention, each interactive region is associated with a corresponding input circuit, and switch-on of a respective input circuit is transformed into selection of a respective interactive region associated therewith.

As a further embodiment of the invention, each interactive region is associated with a different predefined label. When the accepted input is equivalent to a specific label, a corresponding interactive region associated with said label is selected. Preferably, said each predefined label is voice data or image data.

A password verifying device of the invention may be used to perform the aforementioned method of touch operation of the interactive regions. The device includes a control unit, a storage unit and a touch screen. The storage unit stores a password sequence. The control unit is intended to perform a program realized by said method. The touch screen is used to provide interactive regions for the program implemented by the method, to receive selection operation of the user regarding the interactive regions, and to transform the selection operation into instructions of selecting the interactive regions.

Another kind of password verifying device of the invention is adapted to the method of associating the interactive regions with the input circuits. Said device includes a control unit, a storage unit, several input circuits, and a display screen. The storage unit stores a password sequence. The control unit is intended to perform a program realized by said method. The display screen is used to provide interactive regions for the program implemented by the method. Each input circuit is electrically connected to the control unit and corresponds to a respective interactive region. Switching-on of each input circuit will transform this switching-on status into instructions of selecting a corresponding interactive region.

Another kind of password verifying device of the invention is adapted to a method of associating the interactive region with corresponding predefined label representing voice data. Said device includes a control unit, a voice input unit, a storage unit, and a display screen. The storage unit stores a preset password sequence and said predefined label. The control unit is intended to perform a program realized by said method. The display screen is used to provide interactive regions for the program implemented by the method. The voice input unit is electrically coupled with the control unit. The voice input unit receives voice data input. When it is found by the control unit that the input voice data is identical to one of the predefined labels, an instruction of selecting an interactive region associated with said predefined label is output.

Another kind of password verifying device of the invention is adapted to a method of associating the interactive region with corresponding predefined label representing status data. Said device includes a control unit, an image recognition unit, a storage unit, and a display screen. The storage unit stores a preset password sequence and said predefined label. The control unit is intended to perform a program realized by said method. The display screen is used to provide interactive regions for the program implemented by the method. The image recognition unit is electrically coupled with the control unit. The image recognition unit captures face image of the user, extracts eyes feature information from the image, and recognizes open/close status of the eyes. When it is found by the control unit that the eyes feature information is identical to one of the predefined labels representing status data, an instruction of selecting an interactive region associated with said predefined label is output.

The present invention brings following good effects when compared with prior art technology.

At first, in this invention all the characters contained in a predefined password are collectively considered as a sequence. A series of characters containing those of the password are randomly divided into several portions and each portion is displayed in an interactive region for selection of the same region by the user. As such, selection operation of a specific interactive region by the user indeed is selection of the characters displayed in this interactive region showing in a key layout formed before this selection. Each time the user selects the interactive regions, arrangement and combination of the characters may be different for these regions. Therefore, fuzziness of the selected characters is greatly enhanced. Even in case that selection activity of the user during password verifying process is noticed by others, illegal person will still not be able to ascertain the accurate password sequence, thus greatly improving safety of the password verification.

Secondly, after several characters are randomly sorted into multiple groups and are shown in respective interactive regions, each group may contain more than one character. In this situation, the user no longer relies upon buttons (area) to input the password, the number of the buttons being the same as that of the interactive regions. The number of a conventional buttons is decreased to that of the interactive regions of the invention. Accordingly, operation convenience is improved for the user. In addition, the safety effect is not affected at all.

Thirdly, in a further improvement of the invention, by showing a character in at least two interactive regions of a button layout, it is permitted to have the same number of characters for these regions. This on one hand enhances displaying effect of the characters, and on the other hand, improves fuzziness of the password by showing the same character in two or more regions, thereby increasing safety. Furthermore for a legal user, as the same character occurs in more regions at a time, selection of any region covering this character will confirm that the same character is identical to a corresponding character of the password sequence. This further improves convenience of operation.

Finally, selection of the interactive regions may be implemented by touch screen input, hardware circuit input, voice input and the like. Input of the password may be realized by kinds of input means including tools such as touch screen, physical buttons, microphone or the like. Conclusion may be drawn that the present invention has extensive application and will have deep influence on security technology of the electronic devices.

### BRIEF DESCRIPTION OF THE DRAWINGS

Figure 1 shows a schematic view of an electrical structure of a password verifying device of the invention;
Figure 2 shows an operation interface of a password verifying device of the invention; and
Figure 3 shows another operation interface of a password verifying device of the invention.

### DETAILED DESCRIPTION OF THE INVENTION

Various embodiments of the invention are described below in greater details with reference to the drawings.

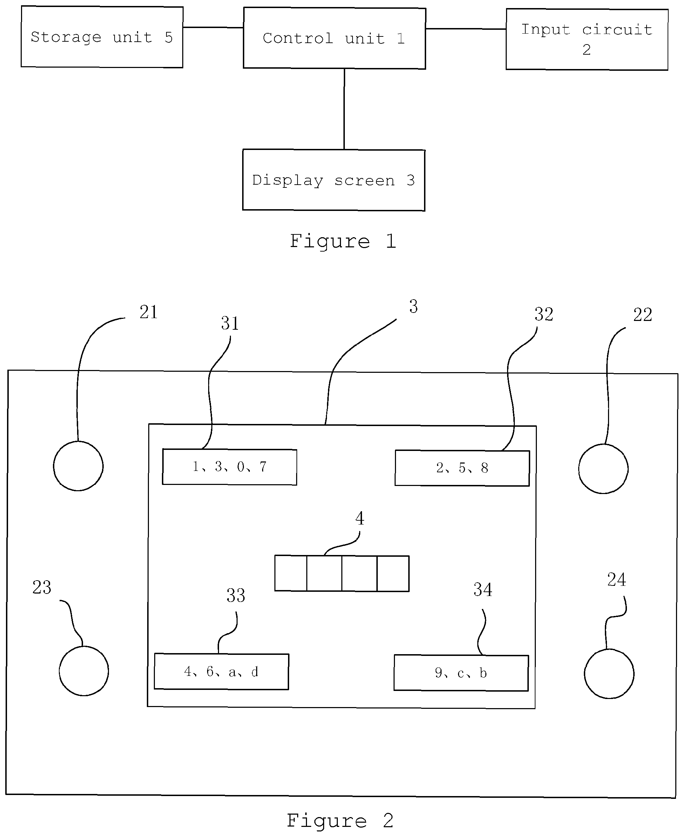

Referring to figure 1, a password verifying device of the invention includes a control unit 1, a storage unit 5, a display screen 3 and several input circuits 2.

The control unit 1 operates to control the entire device and mainly serves to perform a program obtained according to a password verifying method of the invention so as to perform password verification process. The storage unit 5 functions to permanently or temporarily store various intermediate data generated during operation of the program obtained according to a password verifying method of the invention. The intermediate data may include for example user's predefined password, part or full of candidate information units and selection information units to be formed subsequently. The storage unit 5 may also store predefined labels such as image, voice and status which may be involved during storage program. Person of the art should be noted that the predefined password of the present method and device should be permanently stored (excerpt that the user changes it when performing a reset process). Regarding other data used in the method of the invention, it is determined flexibly by the program whether this data should be stored in the storage unit. Therefore, use of the storage unit in the invention should not be understood as having limitation to the storage technology used in this invention. Under the control of the control unit 1, the password verifying method of the invention realizes human-machine interaction by means of the input circuits 2 and display screen to realize password verification operation of the invention.

In the interface of figure 2, a display screen 3 including four corners and a central area is shown. There are four interactive regions 31-34 located at four corners of the display area respectively for displaying all elements of four candidate sets for the user. Each element is a character and therefore, the interactive regions are used for displaying a set of known characters. An output area 4 located at the center of the display screen is mainly intended for indicating verification progress during password input process by the user. It is noted that in the invention there is no any limit regarding location of the interactive regions as would be understood by person of the art.

Four circular buttons located close to the four interactive regions of the display screen are buttons 21-24 of the four input circuits 2 for switching on these circuits 2 respectively, so that the control unit 1 is able to detect switching on of a specific input circuit 2 and then transform it into instruction of selecting an interactive region associated with the input circuit (button). By this manner, user input is accepted. Accordingly it is evident that selection of a specific interactive region may be done by pressing a corresponding button adjacent to the same corresponding interactive region.

The above implementation manners are often seen on bags, suitcases, and POS terminals. They are also adaptive to ATM, car security system and other applications where password verification is needed. According to a different implementation manner, the input circuit 2 may be simplified, and display screen may be implemented by a widely used touch screen having touch function. Moreover, for a smart system such as mobile phone, microphone may be used as voice input unit and voice of the user is received by manner of voice input. The input voice is recognized and compared with several predefined labels associated with respective interactive regions. When the voice data is consistent with the predefined labels, it is confirmed that a specific interactive region related to this label has been chosen. Consistency of the voice data with the predefined labels means in the voice technology field, a piece of voice data is compared with a predefined voice data, or they are transformed into feature information and then are compared and it is considered that they are consistent in a tolerance range. This is also well known in pertinent art. Similarly, camera and related image analysis hardware and software may be used as image recognition unit to perform image recognition process, capture eyes image of the user, extract eye data from the image, recognize open/close status of the eyes and compare it with the predefined labels representing status data. These predefined labels are associated with respective interactive regions. When it is found that the eyes feature is consistent with a specific predefined label, selection of an interactive region associated with said label is made. Consistency of the eyes feature with the label means in the image processing field determining whether image information or its image feature information is equal or close to another predefined image data or its status information. Apparently, by incorporating various input tools described above, the device and method of the invention may be easily combined with kinds of smart terminals.

No matter how the hardware is optimized and selected, implementation of the password verifying method of the invention will not be such limited.

The password verifying method of the invention is based on following general principles.

At first, a storage unit stores the predefined password of the user, and the password is composed of a sequence of characters. As such, the password may also be referred to as a password sequence. It is noted that the password sequence does not mean there are several sets of passwords, but only one password made of several characters. As noted above, input means of the predefined password may be flexibly configured by person of the art. It is well known that a password is generally constructed of characters. A simple password may include ten numbers 0-9. Of course, it may also be constructed of other characters such as English letters or other punctuations or unusual signs. For convenience of description of the invention, it is assumed that characters such as 0-9 and English letters a-d and the like are presented in figure 2. Each password sequence may be regarded as a known set of characters and each character is an element of the set. Of course, the password sequence should be arranged according to certain order. In the method of the invention, a candidate character set is defined for the password sequence composed of multiple known characters arranged according to certain order. In this set, all the characters of the password sequence, i.e., all the elements of the known set should be included therein. In other words, the set of known characters is a subset of the candidate character set. Alternatively speaking, the candidate character set is obtained by extending all elements of the set of known characters. This is because when the user presets a password, normally some of a group of characters are selected. As such, in general a candidate character set is not completely equal to the known set of characters. However, the present invention does not exclude situations where the two sets are completely equal to each other. According to mathematics, complete equality is a specific example of inclusion.

Next, after the candidate character set and known set of characters are defined, corresponding to each element of the known set of character, all the elements of the candidate character set are randomly distributed into several candidate character subsets. Ensure that at least one candidate character subset includes two or more elements. The elements of each candidate character subset are correspondingly distributed into and displayed by several interactive regions such that each interactive region corresponds to an independent candidate character subset and displays all elements of the subset. For example, four groups of characters displayed by respective four interactive regions are irregularly arranged. It is noted that randomly arranged four groups of characters follow some regularity such as ASCII code, natural number and the like, this situation should be understood as a specific example of the random distribution of the invention and should not be excluded from the present invention. There are totally 14 characters in the four interactive regions and belong to four candidate character subsets. As these 14 characters are included into four candidate character subsets, generally each candidate character subset necessarily contains multiple character elements. This ensures multi-vocal expression after each candidate character subset is displayed in a corresponding interactive region. Choosing of this specific candidate character subset will not certainly be directed to a unique character, thus significantly safety. In case that the several characters of the candidate character set are distributed to multiple subsets and the number of the subsets is smaller than that of the characters of the candidate character set, at least one candidate character subset will contain two or more character elements. Or, some candidate character subsets may contain no characters, while rest of the candidate character subsets contain all characters of the candidate character set. This will also ensure that at least one candidate character subset will contain two or more character elements. In theory, as long as only one candidate character subset contains more than one character elements, password verification process will definitely be multi-vocal and the objects of the invention will be met. However, the preferred situation is each candidate character subset contains two or more character elements to enhance fuzziness of the password verification.

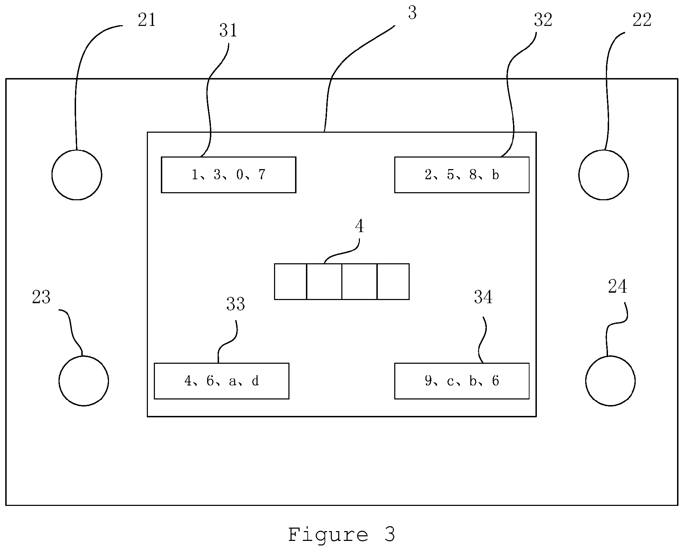

As an improvement, referring to figure 3, after random distribution of all characters, all the candidate character subsets may be configured so that they contain same number of characters. Here, different interactive regions may contain the same characters referred to as common characters for simple description purpose. These common characters occur in different interactive regions to further improve fuzziness of the password verification. Implementation of these common characters may have some flexibility. For example in the example described above, 14 characters are arranged into four candidate character subsets such that four interactive regions will contain different number of characters. According to a further improvement, one or two characters may be randomly added to those candidate character subsets having less than four characters so that each candidate character subset has four characters. By the same reason, each interactive region will also show four characters. In this case, two or more interactive regions will own said common characters. In this situation, as the four regions have the same number of characters, these regions further bring regularity. As time taken to input password is very short, it will be hard for a stealer to get the password due to existence of common characters; and therefore safety of password is also enhanced. Of course, it will be impractical if a character occurs in all interactive regions (candidate character subsets). Accordingly, in practice, this same character may not be shown in several interactive regions. However, this does not mean exclusion of this situation from the spirit of the invention.

It is noted however though there has been described a solution where corresponding to each password element (character) of the password sequence, all elements are randomly distributed in the candidate character set, during process of password verification, contents of each candidate character subset are also updated in real time. That is, character layout presented by respective interactive regions is also updated in real time, thus guaranteeing higher safety. However, the invention also discloses the following solution. Only before verification of a password element of a first location, the candidate character sets are randomly distributed so as to form respective candidate character subsets and show characters in the four interactive regions. During subsequent password elements verifying process, the candidate character subsets are no longer updated. This solution is also feasible. Though this solution reduces complexity of computation, it still maintains multi-vocality and concealment. It will not be necessary for the user to read again contents of the other candidate character subsets for each password element and therefore this can improve convenience of password verification.

In addition, in above solution where the candidate character set is divided into multiple candidate character subsets so as to form an interactive region layout, distribution of the elements of the candidate character subsets is random and arbitrary. However, non-random distribution of the elements is also possible in the present invention. For instance, several layout solutions in which the candidate character subsets are randomly arranged may be stored in the storage unit in advance. These different layout solutions may be ranged in accordance to certain order. Before verification of each element of the password, a different layout solution may be used according to its rank. As a result, layout solutions may be dynamically updated and it is assured that all characters in the candidate character subset of a certain layout solution are randomly arranged. The operation of the program is transparent to the user as the user only sees characters contained in the candidate character subset of a corresponding interactive region.

Next, corresponding to each element of the known character set of the password sequence, after dividing the candidate character set into several candidate character subsets, instruction of selecting a specific interactive region by the user is received based on respective elements of the known character set. It is then determined that whether each character of the password sequence (each element of the known character set) belongs to the characters (the candidate character subset) displayed in a specific interactive region selected currently by the user. When all the elements of the known character set belong to the candidate character subset corresponding to the specific interactive region currently selected by the user, signal indicating successful password verification is output and it is confirmed that password verification is ok. As discussed above, according to one embodiment of the invention, input of selection instruction of the user may be realized by clicking the physical buttons 21-24. According to an embodiment not shown, when a touch display screen is used, clicking of a corresponding interactive region has the same effect of inputting selection instruction. Clicking action is transferred to the control unit via said touch display screen and transformed into instruction of selecting a corresponding interactive region. Alternatively, voice input unit such as microphone may be used to receive voice of the user. Keywords equivalent to the predefined label of an interactive region representing voice data may be identified to realize selection of the same interactive region. The identification may be implemented by the control unit such that the control unit will directly generate selection instruction associated with the interactive region. Further, an image recognition unit such as camera may be used to capture eyes feature of the user so as to decide whether eyes action of the user is equivalent to the selection of a certain interactive region. By the same token, the control unit may analyze the image data obtained by the camera and compare the same data with the predefined label representing status data of the eyes feature information so as to realize image recognition function, thereby directly generating selection instruction associated with the interactive region. No matter what means is used to realize selection of the interactive region, in essence kinds of known input means are used to select the candidate character subset (characters contained in the corresponding interactive region). Therefore, it means that the legal user knows the character elements shown in the interactive region and input the correct content. This operation is applied to each element of the password sequence. According to predefined order of the password sequence, and for each password character, the user faces selection of the interactive region, thus interactive region corresponding to each password character is obtained. For this method, password verification is achieved by check one by one whether each element of the known character set belongs to the candidate character subset corresponding to a specific interactive region selected by the user. When a current element of the known character set (character included in the password sequence) belongs to the candidate character subset corresponding to a specific interactive region (character displayed in the region) selected currently by the user, it is confirmed that the user has input the correct password character. Otherwise, wrong password character has been input by the user. Once several selection operations (the number is generally the same as the total number of the password sequence) match correctly all the password characters, this means the password is successfully verified. In this instance, the password verifying device of the invention outputs signal indicating successful verification of the password to an external unit for further operation, such as unlocking, transaction, starting a program and the like, ending the entire process. Of course, in case the user inputs a specific password character, verifies a specific element of the known character set, but the candidate character subset (content displayed by the interactive region) corresponding to a specific interactive region fails to contain this specific element (password character), this means verification of this specific password character fails. For safety reason, in present method, subsequent steps may be terminated via the program, and even warning may be provided, thus ensuring safety.

Apparently, in the method of the invention, though a candidate character set is divided into multiple candidate character subsets, the number of the subsets is the same as that of the interactive regions, and number of the interactive regions is smaller than that of the elements of the candidate character subsets, computation times are increased to overcome drawbacks resulted from insufficiency of numbers of the interactive regions, as each time the candidate character subset corresponding to the interactive region is updated, random re-arrangement is performed, thus ensure security.

Evidently, the method of the invention is realized by computer program. Design of the program may be flexible. To easily understand the present invention so as to easily practice the same, program implementation of the verifying method of the invention is described below with reference to the drawings.

A first kind of verification implementation:

At first, according to the arrangement order of the respective elements of the known character set (i.e., arrangement order of the password characters included in the password sequence), the following sub-steps are performed,
1. All the elements of the candidate character set are processed and divided into multiple sets each of which is a candidate character subset. The number of the subsets is the same as that of the interactive regions of the password verifying device. Preferably, each candidate character subset contains at least two elements. Or as shown in figure 2, the number of elements contained in each candidate character subset is identical. When the number of the elements of the candidate character set is insufficient for averagely being divided into the subsets, it may be allowed that different candidate character subset may contain common characters such that all the candidate character subsets have the same number of the elements. Next, each candidate character subset corresponds to an interactive region, and all elements of respective candidate character subsets are correspondingly arranged into respective interactive regions such that each interactive region displays several characters. If required, each interactive region may display the same number of the characters. In design of the program, to ensure that each interactive region displays the same number of the characters, different interactive region may contain common characters
2. Wait for user input. After reading characters shown in the candidate character subsets of respective interactive regions of the display screen, the user determines a target interactive region. Adapted to above various means realized by hardware, the selection operation is conducted manually, via voice, or by visual check. After the program accepted user instruction of selecting a specific interactive region based on a current element (current password character) of the known character set, it immediately check whether the current element (current password character) of the known character set belongs to the displayed candidate character subset of the specific interactive region selected by the user. This checking operation may be realized by comparing the current element with the elements of the candidate character subset, as would be understood by person of the art. When the check result is affirmative, that is, when the current element belongs to the candidate character subset, set the status of a label variable working as a temporary label as password verification success, for example this label variable may be assigned the value "Y". Otherwise, it is set to be password verification failure and assigned the value "N".

The above two steps are performed for each password character. In theory, verification of each password character requires above two steps.

After completion of the above cycle, regarding all the password characters, the user has chosen respective interactive regions, meaning finish of password input. Therefore, subsequent feedback actions may be performed. Specifically, in present method, result of the password verification may depend upon status of the label variable. If the variable is still "Y", then password verification is successful, and subsequently signal showing successful password verification is output for further operation. Otherwise, the above cycle is terminated as long as the label variable is assigned "N" even for only one time. In this situation, it is confirmed that password verification fails, and signal showing failed password verification is output, and the result is fed back to the user.

A second kind of verification implementation:

At first, according to the arrangement order of the respective elements of the known character set (i.e., arrangement order of the password characters included in the password sequence), the following sub-steps are performed.
1. All the elements of the candidate character set are processed and divided into multiple sets each of which is a candidate character subset to be displayed in a corresponding interactive region. The number of the subsets is the same as that of the interactive regions of the password verifying device. Preferably, each candidate character subset contains at least two elements. Next, each candidate character subset corresponds to an interactive region, and all elements of respective candidate character subsets are correspondingly arranged into respective interactive regions such that each interactive region displays several characters. Or, the number of elements contained in each candidate character subset may be identical. When the number of the elements of the candidate character set is insufficient for averagely being divided into the subsets, it may be allowed that different candidate character subset may contain common characters such that all the candidate character subsets have the same number of the elements. Next, each candidate character subset corresponds to an interactive region, and all elements of respective candidate character subsets are correspondingly arranged into respective interactive regions such that each interactive region displays several characters. If required, each interactive region may display the same number of the characters. In design of the program, to ensure that each interactive region displays the same number of the characters, different interactive region may contain common characters.
2. Wait for user input. After reading characters shown in the candidate character subsets of respective interactive regions of the display screen, the user determines a target interactive region. Adapted to above various means realized by hardware, the selection operation is conducted manually, via voice, or by visual check. Different from the previous verification process, after the program accepted user instruction of selecting a specific interactive region based on a current element (current password character) of the known character set, check is not performed immediately. Rather, it establishes correlation data between the current element (current password character) and the candidate character subset of a respective interactive region selected by the user and stores this data into the storage unit. After that, it returns back to step 1 to verify the next password character, until the last character is verified. Then, the next steps are performed.

The previous cycle is ended to accept input and selection of respective password characters by the user such that all the elements of the known character set are selected by the user, thus establishing corresponding relationship among the respective elements and dynamic candidate character subsets. Consequently, new cycle may begin. Specifically, he corresponding relationship data is invoked, and it is checked whether a current element included in each group of corresponding relationship data belongs to a candidate character subset associated with said data. If the answer is yes, then the current checking result is given a temporary label, and a corresponding label variable indicates password verification success. Otherwise, if the current element fails to belong to a corresponding candidate character subset selected by the user, then the label variable indicates password verification failure. The current cycle will be ended once there is at least one verification failure as shown by the label variable. In this case, it is confirmed that password verification failed based on indication of the label variable, and signal representing password verification failure is output, thus improving program efficiency. If all the elements are checked and no password verification failure result is found, then it is confirmed that password verification is successful based on said temporary label, and signal representing password verification success is output.

It should be emphasized that various software programs may be formed due to use of different program language, different programming style and the like. The above embodiments are only for illustrative and are not for limiting the scope of the invention.

In summary, the password verifying device of the invention is based on the password verifying method of the invention. By causing fuzziness to the contents input by the user, the input contents become multi-vocal, thus ensuring the password will not be given away during input process. In addition, by randomly generating dynamical effect of the contents input by the user, password operation complexity is increased. This comprehensively and entirely improves safety and convenience of the password verification process.

Though various embodiments of the invention have been illustrated above, a person of ordinary skill in the art will understand that, variations and improvements made upon the illustrative embodiments fall within the scope of the invention, and the scope of the invention is only limited by the accompanying claims and their equivalents.

## Claims

1. A password verifying method for verifying whether the password input by a user is correct comprising the following steps:
(1) providing a plurality of interactive regions on each of which several known characters are arranged and shown randomly, at least one interactive region containing at least two characters;
(2) accepting selection of said plurality of interactive regions made by the user, and after selection of present interactive regions by the user, randomly re-distributing said several known characters into said respective interactive regions to be shown and selected for next time; and
(3) comparing one by one characters contained in a predefined password sequence with characters contained in the interactive regions selected each time, and outputting signal representing successful password verification when each character contained in the password sequence is identical to a corresponding character shown in a corresponding interactive region selected each time.

2. The password verifying method according to claim 1, wherein the number of characters displayed each time in respective interactive region is identical, and the number is two or more; and at least one character is commonly displayed in two or more interactive regions.

3. The password verifying method according to claim 2, wherein not all interactive regions display the same character.

4. The password verifying method according to any one of claims 1-3, wherein each time the user selection is accepted in step (2), one by one comparison is conducted in a manner as depicted in step (3); when it is confirmed that a current character contained in said password sequence is identical to that displayed in the interactive region currently selected, the manner presented in step (2) is implemented to update characters of respective interactive regions; after that, wait for next selection of the user, and this process repeats until all the characters contained in the password sequence are successfully confirmed; then, the signals are output in the manner of step (3).

5. The password verifying method according to any one of claims 1-3, wherein in step (2) updated display content of the interactive regions is presented based on the number of the characters included in the password sequence; the character displayed in the interactive region selected by the user is recorded each time the user input is accepted; step (3) is performed only after all the interactive regions are selected by the user; in this case, comparison is made between each character of the password sequence and character contained in a respective interactive region selected by the user each time; when the comparison is successful, the signals are output in step (3).

6. The password verifying method according to any one of claims 1-3, wherein when the interactive regions are displayed each time, at least two of them show different characters.

7. The password verifying method according to any one of claims 1-3, wherein in process of comparison one by one, when it is accordingly determined that a specific character of the password sequence is not identical to that displayed in a corresponding interactive region selected by the user, the present method ends directly so as not to perform subsequent steps.

8. The password verifying method according to any one of claims 1-3, wherein the predefined password sequence includes at least four characters.

9. The password verifying method according to any one of claims 1-3, wherein several interactive regions shown at a time are in different color.

10. The password verifying method according to any one of claims 1-3, wherein all the interactive regions are used for receiving user touch operations serving as selection instructions of respective interactive regions.

11. The password verifying method according to any one of claims 1-3, wherein each interactive region is associated with a corresponding input circuit, and switch-on of a respective input circuit is transformed into selection of a respective interactive region associated therewith.

12. The password verifying method according to any one of claims 1-3, wherein each interactive region is associated with a different predefined label; when the accepted input is equivalent to a specific label, a corresponding interactive region associated with said label is selected.

13. The password verifying method according to claim 12, wherein said each predefined label is voice date.

14. The password verifying method according to any one of claims 1-3, wherein said each predefined label is status data.

15. A password verifying device for realizing the method described in any one of claims 1-10, comprising a control unit, a storage unit and a touch screen; the storage unit stores a password sequence; the control unit is intended to perform a program realized by said method; the touch screen is used to provide interactive regions for the program implemented by the method, to receive selection operation of the user regarding the interactive regions, and to transform the selection operation into instructions of selecting the interactive regions.

16. A password verifying device for realizing the method described in any one of claims 1-9 and 11, comprising a control unit, a storage unit, several input circuits, and a display screen; the storage unit stores a password sequence; the control unit is intended to perform a program realized by said method; the display screen is used to provide interactive regions for the program implemented by the method; each input circuit is electrically connected to the control unit and corresponds to a respective interactive region; switching-on of each input circuit will transform this switching-on status into instructions of selecting a corresponding interactive region.

17. A password verifying device for realizing the method described in claim 13, comprising a control unit, a voice input unit, a storage unit, and a display screen. The storage unit stores a preset password sequence and said predefined label; the control unit is intended to perform a program realized by said method; the display screen is used to provide interactive regions for the program implemented by the method; the voice input unit is electrically coupled with the control unit. The voice input unit receives voice data input; when it is found by the control unit that the input voice data is identical to one of the predefined labels, an instruction of selecting an interactive region associated with said predefined label is output.

18. A password verifying device for realizing the method described in claim 14, comprising a control unit, an image recognition unit, a storage unit, and a display screen; the storage unit stores a preset password sequence and said predefined label; the control unit is intended to perform a program realized by said method; the display screen is used to provide interactive regions for the program implemented by the method; the image recognition unit is electrically coupled with the control unit; the image recognition unit captures face image of the user, extracts eyes feature information from the image, and recognizes open/close status of the eyes; when it is found by the control unit that the eyes feature information is identical to one of the predefined labels representing status data, an instruction of selecting an interactive region associated with said predefined label is output.
